# EUROPEAN PATENT APPLICATION

(11) **EP 2 506 539 A1**
(43) Date of publication of application: **03.10.2012**
(21) Application number: 11182863.8
(22) Date of filing: 27.09.2011
(51) Int. Cl.: H04M 1/24, G01P 21/00, G01S 7/497

(54) **Test auxiliary device**

(30) Priority: 01.04.2011 TW 100111544
(71) Applicant: Askey Technology (Jiangsu) Ltd., Economic-Technological Development Area Wujiang Jiangsu (CN); Askey Computer Corp., New Taipei City 235 (TW)
(72) Inventor: Sheng, Tzu-Haomr, 235 New Taipei City (TW); Ou, Bing-Cheng, 241 New Taipei City (TW); Hsieh, Ching-Feng, 108 Taipei City (TW)
(74) Representative: Bonvicini, Davide

(57) **Abstract**

A test auxiliary device for testing a portable data terminal having a plurality of sensors includes a base, a carrying unit, a driving unit, and a controlling unit. The carrying unit is disposed on the base and includes a carrying platform and a carrying base. The carrying platform and the carrying base form a first angle and a second angle with the base, respectively, and thereby together form a compound slope. The driving unit drives the carrying unit to move, allowing the carrying platform to move with acceleration and at an angular velocity. The controlling unit receives sensing values generated by the sensors, respectively. The test auxiliary device further includes a test matching unit for testing the sensors in operation. Accordingly, the test auxiliary device assists users in determining whether the sensors of the portable data terminal are functioning well.

## Description

### FIELD OF THE INVENTION

The present invention relates to test devices, and more particularly, to a test auxiliary device for testing a portable data terminal having a plurality of sensors.

### BACKGROUND OF THE INVENTION

A portable data terminal (PDT, such as a mobile communication device, a barcode scanner, or a driving recorder) usually comprises therein a plurality of sensors. The sensors enable the portable data terminal to achieve its purposes. A gravity sensor (G-sensor) is used for sensing a velocity and a direction. An E-compass is used for detecting an orientation and detecting whether the orientation of a screen changes. A position sensor (P-sensor) detects the distance between the portable data terminal and a user so as to allow a screen to be started or shut down in a controllable manner. A light sensor is used for detecting ambient light such that the contrast of the brightness of a screen can be put under control. A gyroscope is used for detecting the angular velocity of the portable data terminal.

To make sure that the sensors can function well, the sensor manufacturers usually perform just before sensor delivery a sensing characteristics test on a single sensor. The sensor will not be delivered to an application manufacturer, such as a portable data terminal manufacturer, unless and until the result of the sensing characteristics test confirms that the sensor can function well. Taiwanese published Patent Application 200819760 discloses a sensor testing method, a sensor testing device, and a sensor operation teaching device, wherein the sensor testing device is for use in testing whether a sensor malfunctions, and whether a contact-switching phenomenon arises from a sensor in operation, so as to confirm whether the sensor is operating well.

However, in the situation where a plurality of sensors is integrated into a portable data terminal at an assembly line, it is impossible to determine whether the sensors thus installed can function well. For example, the sensors cannot function well or even cannot start, because during an installation process a sensor may be erroneously installed or may fail, or the sensitivity of a sensor may fall outside an allowable error range. Furthermore, with the portable data terminal being equipped with a plurality of sensors, testing the sensors one by one inevitably takes long time, requires much manpower, and incurs additional manufacturing costs. In addition, conventional tests are conducted on the sensors manually, and thus the test conditions are never constant and consistent; hence, the conventional tests are predisposed to wrong results.

Accordingly, it is imperative to overcome the above drawbacks of the prior art, using a test auxiliary device of the present invention.

### SUMMARY OF THE INVENTION

It is an objective of the present invention to provide a test auxiliary device for testing a portable data terminal having a plurality of sensors.

Another objective of the present invention is to provide a test auxiliary device whereby a plurality of sensors integrated into a portable data terminal are analyzed concurrently and tested in a quick, standardized, consistent, and accurate manner.

In order to achieve the above and other objectives, the present invention provides a test auxiliary device for testing a portable data terminal having a plurality of sensors. The test auxiliary device comprises: a base, a carrying unit, a driving unit, and a controlling unit. The carrying unit is disposed on the base and comprises a carrying platform and a carrying base. The carrying platform is disposed on the carrying base and adapted to receive the portable data terminal. The base forms a first angle with the carrying base and a second angle with the carrying platform, wherein the carrying platform and the carrying base together form a compound slope. The driving unit is disposed on the base, connected to the carrying unit, and used for driving the carrying unit to move, allowing the carrying platform to move with acceleration and at an angular velocity. The controlling unit is connected to the portable data terminal, used for receiving sensing values generated by the sensors, respectively, and used for comparing and analyzing the sensing values and sensing reference values stored in the controlling unit.

The test auxiliary device of the present invention assists with the testing of a plurality of sensors integrated into a portable data terminal. For example, the sensors are used for sensing the physical properties, such as gravity, direction, angular velocity, position, light intensity, and distance of the portable data terminal. The test auxiliary device enables a standardized test environment to be performed on the sensors, such that it is feasible to determine accurately whether the sensors integrated into the portable data terminal meet the requirements of normal operation, by analyzing the sensing values generated by the sensors.

The test auxiliary device of the present invention assists with the testing of the portable data terminal by presenting the status of the actual operation of the sensors in the form of scientific data, so as to determine accurately whether the sensors thus integrated are functioning well. Hence, the present invention not only overcomes a drawback of the prior art, that is, conventional tests are conducted on the sensors manually and thereby are predisposed to wrong results, but also enable a test to be conducted on the sensors in a quick, standardized, consistent, and accurate manner.

### BRIEF DESCRIPTION OF THE DRAWINGS

Objectives, features, and advantages of the present invention are hereunder illustrated with specific embodiments in conjunction with the accompanying drawings, in which:
FIG. 1 is a perspective view of a test auxiliary device according to the first embodiment of the present invention;
FIG. 2 is a schematic view of a carrying unit of the test auxiliary device shown in FIG. 1;
FIG. 3 is a schematic view of a driving unit of the test auxiliary device shown in FIG. 1 according to the first embodiment of the present invention;
FIG. 4 is a schematic view of the driving unit of the test auxiliary device shown in FIG. 1 according to the second embodiment of the present invention;
FIG. 5 is a schematic view of the carrying unit of the test auxiliary device after rotation as shown in FIG. 3; and
FIG. 6 is a perspective view of the test auxiliary device according to the second embodiment of the present invention.

### DETAILED DESCRIPTION OF THE PREFERRED EMBODIMENTS

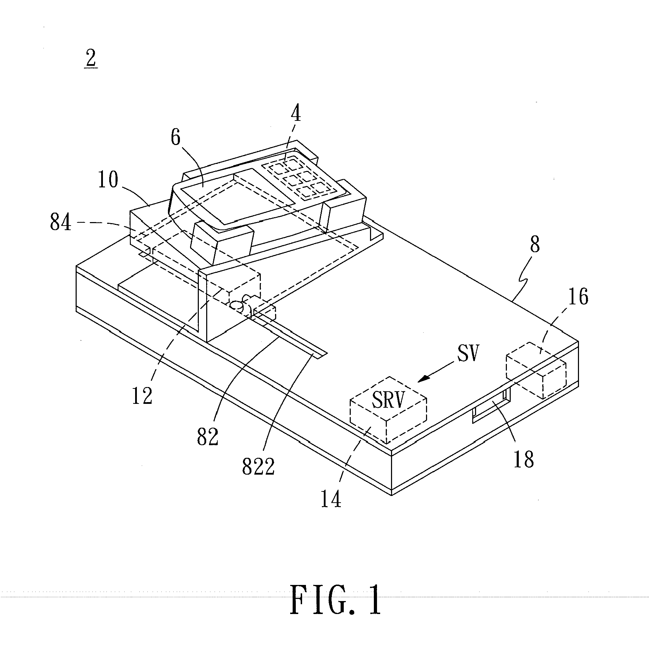

Referring to FIG. 1, there is shown a perspective view of a test auxiliary device 2 according to the first embodiment of the present invention. As shown in FIG. 1, the test auxiliary device 2 is for testing a portable data terminal (PDT) 6 having a plurality of sensors 4. The portable data terminal 6 is a mobile communication device, a handle barcode reader, a portable data capture device, or a global position system. The sensors 4 are a plurality of sensing devices for converting an intended sensing physical property (such as gravity, direction, angular velocity, position, light intensity, or distance) into a recordable electrical signal.

For example, gravity, a physical property, can be sensed by a three-axis G-sensor 42 to detect a three-dimensional spatial change. Direction, a physical property, can be sensed when an E-compass 44 senses the magnetic field of the Earth or sensed by means of a P-sensor 46. Light intensity and distance, two common physical properties, can be sensed by a light sensor 48, such as a photodiode or a laser diode. Angular velocity, a physical property, can be sensed by a gyroscope 50.

The test auxiliary device 2 comprises a base 8, a carrying unit 10, a driving unit 12, and a controlling unit 14. In this regard, a plurality of openings 82, 84 and a travel track 822 are formed on the upper surface of the base 8. The openings 82, 84 and the travel track 822 are illustrative rather than restrictive of the present invention. The opening 84 is used for positioning the carrying unit 10 in place.

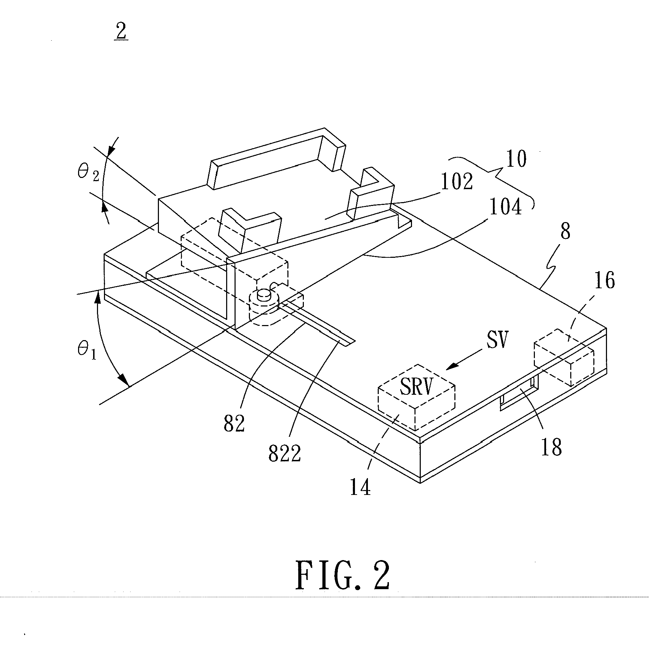

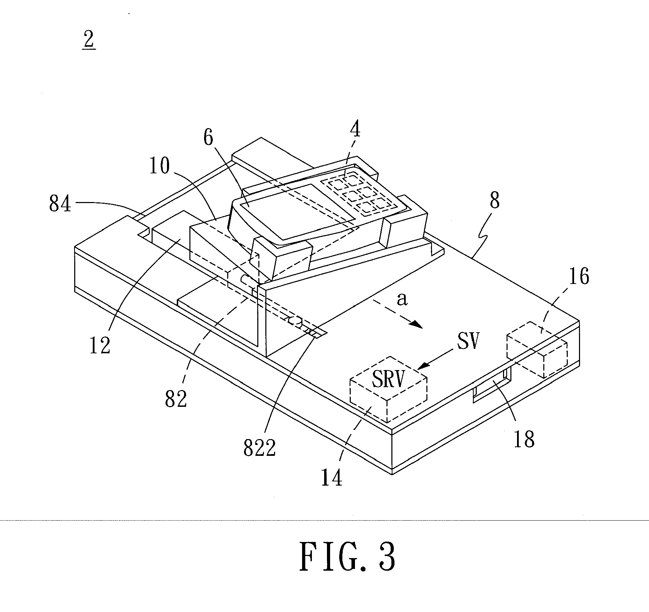

Referring to FIG. 1 and FIG. 2, the carrying unit 10 comprises a carrying platform 102 and a carrying base 104. The carrying platform 102 is disposed on the carrying base 104 for receiving the portable data terminal 6 (as shown in FIG. 3). A first angle θ₁ is formed between the carrying base 104 and the base 8. A second angle θ₂ is formed between the carrying platform 102 and the base 8. Hence, the carrying platform 102 and the carrying base 104 on the carrying unit 10 together form a compound slope. In an embodiment, an enclosing foam (not shown) is peripherally disposed around the carrying platform 102 for fixing the portable data terminal 6 in place better.

Referring to FIG. 1, FIG. 2, and FIG. 3, there is shown in FIG. 3 a schematic view of a driving unit of the test auxiliary device 2 shown in FIG. 1 according to the first embodiment of the present invention. As shown in FIG. 3, the driving unit 12 is disposed on the base 8, connected to the carrying unit 10, and used for driving the carrying unit 10 to move, thereby allowing the carrying platform 102 to move with acceleration and at an angular velocity. The definition of the aforesaid technical feature "drive the carrying unit 10 to move" comprises at least one of a displacement, a rotation, and a fling, and shall fall within the scope of the disclosure of the present invention, provided that the driving unit 12 causes the carrying platform 102 to move with acceleration a and at an angular velocity. Such a scenario includes, for example, one in which the driving unit 12 causes the carrying platform 102 to move with acceleration a along the travel track 822 and causes the carrying unit 10 to rotate at a third angle θ₃ at any position of the travel track 822 so as to enable the carrying platform 102 to move with acceleration and at an angular velocity. Alternatively, the driving unit 12 rotates at the third angle θ₃ and flings the carrying unit 10 directly such that the carrying unit 10 rotates and flings with acceleration and at an angular velocity. The third angle θ₃ ranges between 90° and 180°. In this embodiment, the third angle θ₃ is exemplified by 90°. In an embodiment, the driving unit 12 is a device propelled pneumatically or hydraulically.

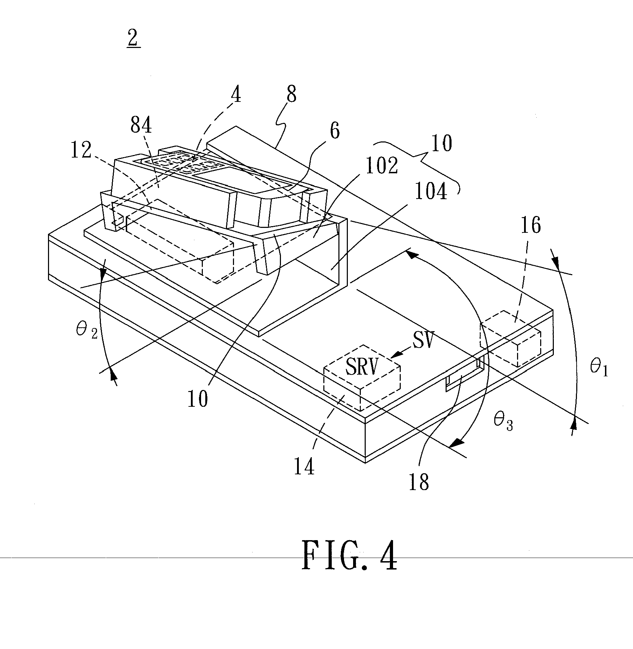

In the second embodiment, the driving unit 12 can drive the carrying unit 10 to move without using the travel track 822 to produce the acceleration. Hence, in the second embodiment, the travel track 822 is absent from the base 8, and the driving unit 12 flings and rotates the carrying unit 10 directly and quickly at the third angle θ₃, such that the carrying unit 10 moves with the acceleration and the angular velocity as shown in FIG. 4.

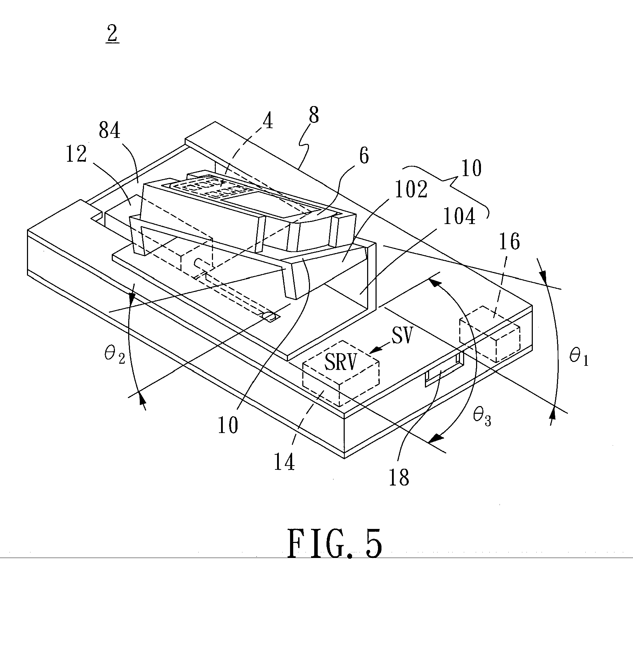

The controlling unit 14 is connected to the portable data terminal 6, used for receiving sensing values SV generated by the sensors 4, respectively, and used for comparing and analyzing the sensing values SV and sensing reference values SRV stored in the controlling unit 14 as shown in FIG. 5. By comparing and analyzing the sensing values SV and the sensing reference values SRV, it is feasible to determine whether the sensors 4 are operating well. For example, when the sensing values SV and the sensing reference values SRV are the same, it is determined that the sensors 4 are operating well. Conversely, when the sensing values SV and the sensing reference values SRV are different, it is necessary to further determine whether the difference falls within tolerable error bounds. If the sensing values SV fall outside the tolerable error bounds, it is determined that the sensors 4 are malfunctioning and thus are likely to operate wrongly. The controlling unit 14 is a computer or a single chip. The sensing reference values SRV are stored in the controlling unit 14.

Referring to FIG. 1, the test auxiliary device 2 further comprises a power unit 16. The power unit 16 is connected to at least one of the driving unit 12 and the controlling unit 14 and used for supplying power to the units. For example, the power unit 16 can supply a DC voltage of 24V to the driving unit 12, supply a DC voltage of 12V to the test auxiliary device 2, and supply a DC voltage of 5V to the portable data terminal 6.

The test auxiliary device 2 further comprises a communication interface unit 18 connected to the controlling unit 14. The communication interface unit 18 is at least one of a serial communication interface port and a parallel communication interface port. For example, the serial communication interface port is RS-232, USB, IEEE 1394, or I2C. In another embodiment, the communication interface unit 18 can also be replaced by means of wireless transmission.

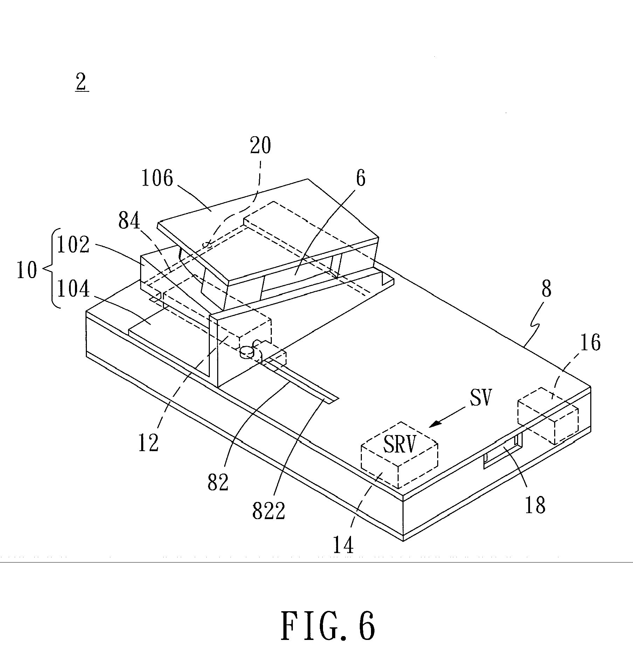

Referring to FIG. 6, there is shown a perspective view of the test auxiliary device 2 according to the second embodiment of the present invention. As shown in FIG. 6, the test auxiliary device 2 is also used for testing the portable data terminal 6 having a plurality of sensors 4. In addition to the base 8, the carrying unit 10, the driving unit 12, and the controlling unit 14, the test auxiliary device 2 further comprises a lid 106 used for covering the carrying platform 102 and disposed thereon. Hence, once the lid 106 covers the carrying platform 102, it will be feasible to sense the distance between the lid 106 and the sensors 4 of the portable data terminal 6. For example, a sensing result of the lid 106 covering the carrying platform 102 indicates the least distance between the portable data terminal 6 and the lid 106. Conversely, a sensing result of the lid 106 not covering the carrying platform 102 indicates an infinite distance between the portable data terminal 6 and the lid 106.

In the situation where the lid 106 covers the carrying platform 102, no external light rays can fall on the carrying platform 102; hence, it is possible to simulate a lightless state. Given a lighting unit 20 disposed in the lid 106, it is feasible to test a light sensor disposed on the portable data terminal 6. For example, once a light sensor senses the light emitted from the lighting unit 20, it will be feasible to simulate the light sensor in an illuminated environment. Conversely, if the lighting unit 20 does not emit any light, it will be feasible to simulate the light sensor in a lightless environment. A point to note is that: with the lighting unit 20 producing the light of a stable intensity of illumination, the sensors 4 can generate stable said sensing values SV.

The test auxiliary device of the present invention assists with the testing of a plurality of sensors integrated into a portable data terminal. For example, the sensors are used for sensing the physical properties, such as gravity, direction, angular velocity, position, light intensity, and distance of the portable data terminal. The test auxiliary device enables a standardized test environment to be performed on the sensors, such that it is feasible to determine accurately whether the sensors integrated into the portable data terminal meet the requirements of normal operation, by analyzing the sensing values generated by the sensors.

The test auxiliary device of the present invention assists with the testing of the portable data terminal by presenting the status of the actual operation of the sensors in the form of scientific data, so as to determine accurately whether the sensors thus integrated are functioning well. Hence, the present invention not only overcomes a drawback of the prior art, that is, conventional tests are conducted on the sensors manually and thereby are predisposed to wrong results, but also enable a test to be conducted on the sensors in a quick, standardized, consistent, and accurate manner.

The present invention is disclosed above by preferred embodiments. However, persons skilled in the art should understand that the preferred embodiments are illustrative of the present invention only, but should not be interpreted as restrictive of the scope of the present invention. Hence, all equivalent modifications and replacements made to the aforesaid embodiments should fall within the scope of the present invention. Accordingly, the legal protection for the present invention should be defined by the appended claims.

## Claims

1. A test auxiliary device for testing a portable data terminal having a plurality of sensors, the test auxiliary device comprising:
a base;
a carrying unit disposed on the base and comprising a carrying platform and a carrying base, the carrying platform being disposed on the carrying base for receiving the portable data terminal, the base forming a first angle with the carrying base and a second angle with the carrying platform, wherein the carrying platform and the carrying base together form a compound slope;
a driving unit disposed on the base, connected to the carrying unit, and used for driving the carrying unit to move and allowing the carrying platform to move with acceleration and at an angular velocity; and
a controlling unit connected to the portable data terminal, used for receiving sensing values generated by the sensors, respectively, and used for comparing and analyzing the sensing values and sensing reference values stored in the controlling unit.

2. The test auxiliary device of claim 1, further comprising a power unit connected to at least one of the driving unit and the controlling unit.

3. The test auxiliary device of claim 2, wherein the power unit supplies a DC voltage of at least one of 24V, 12V, and 5V.

4. The test auxiliary device of claim 2, further comprising a communication interface unit connected to the controlling unit and being at least one of a serial communication interface port, a parallel communication interface port, and a wireless communication port.

5. The test auxiliary device of claim 2, further comprising a lid for covering the carrying platform.

6. The test auxiliary device of claim 5, further comprising a lighting unit connected to the power unit and disposed at at least one of the lid and the carrying platform.

7. The test auxiliary device of claim 1, wherein the driving unit generates at least one of the acceleration and the angular velocity at a third angle.

8. The test auxiliary device of claim 7, wherein the third angle ranges between 90° and 180°.

9. The test auxiliary device of claim 1, wherein the sensors comprise a G-sensor, an E-compass, a P-sensor, a light sensor, and a gyroscope.
